# DEMANDE DE BREVET EUROPEEN

(11) **EP 4 147 572 A1**
(43) Date de publication de la demande: **15.03.2023**
(21) Numéro de dépôt: 21195599.2
(22) Date de dépôt: 08.09.2021
(51) Int. Cl.: A01M 21/04, A01G 11/00, A01M 17/00

(54) **CAISSON POUR UN ENGIN DE DÉSINFECTION DU SOL PAR LA VAPEUR, ET ENGIN DE DÉSINFECTION ÉQUIPÉ D'AU MOINS UN TEL CAISSON AVANTAGEUSEMENT POUR DÉSINFECTION EN FLUX CONTINU**

(71) Demandeur: Isalt, 44270 Machecoul St Meme (FR)
(72) Inventeur: THABARD, Cyril, 44270 MACHECOUL (FR)
(74) Mandataire: Jacobacci Coralis Harle

(57) **Abrégé**

La présente invention concerne un caisson pour un engin de désinfection du sol par la vapeur.

Ce caisson (6) comprend un bloc support (10) qui est destiné à être connecté fluidiquement à un générateur de vapeur (4) et à former une cloche recouvrant le sol (S) pour diffuser / emprisonner la vapeur diffusée dans le sol (S).

Et, selon l'invention, ledit bloc support (10) est équipé d'au moins une bâche d'étanchéité (11), étanche à la vapeur.

Cette bâche d'étanchéité (11) est attachée audit bloc support (10), avantageusement sur au moins une partie de son contour (12), pour former une jupe qui participe à emprisonner la vapeur diffusée.

## Description

### Domaine technique de l'invention

La présente invention concerne le domaine technique de la désinfection des sols par la vapeur.

Elle concerne en particulier les caissons pour les engins de désinfection du sol par la vapeur, mais aussi les engins de désinfection équipés de tels caissons.

### Etat de la technique

Une technique intéressante et efficace pour la désinfection des sols, en particulier les sols agricoles dans les maraîchages, consiste à diffuser de la vapeur sur cette surface.

Cette technique de désinfection est traditionnellement mise en œuvre au moyen d'un engin de désinfection automoteur qui est équipé, d'une part, d'un générateur produisant la vapeur et, d'autre part, de caissons pour diffuser / emprisonner la vapeur dans le sol.

Mais ces engins de désinfection actuels ne sont pas entièrement satisfaisants.

Tout d'abord, ces engins de désinfection doivent se déplacer selon un cheminement du type pas à pas.

Au cours des opérations de désinfection, la vitesse moyenne d'avancement des engins de désinfection actuels est particulièrement faible ; le temps de traitement d'une parcelle est alors relativement long.

Les caissons doivent en effet être maintenus immobiles au-dessus d'une zone à traiter pendant un temps relativement long (généralement plusieurs minutes), afin de maintenir le sol à une température élevée pendant un temps suffisant pour sa désinfection (généralement de 80 à 100°C).

En outre, les engins de désinfection actuels comportent souvent plusieurs caissons juxtaposés.

Cet agencement génère souvent des bandes non désinfectées dans l'espace séparant deux caissons juxtaposés.

### Présentation de l'invention

Afin de remédier aux inconvénients précités de l'état de la technique, la présente invention propose un nouveau caisson pour un engin de désinfection du sol par la vapeur.

Plus particulièrement, on propose selon l'invention un caisson qui comprend un bloc support qui est destiné à être connecté fluidiquement à un générateur de vapeur et à former une cloche recouvrant le sol pour diffuser / emprisonner la vapeur diffusée dans le sol.

Selon l'invention, ledit bloc support est équipé d'au moins une bâche d'étanchéité, étanche à la vapeur.

Ladite au moins une bâche d'étanchéité est attachée audit bloc support, avantageusement sur au moins une partie de son contour, pour former une jupe qui participe à l'emprisonnement de ladite vapeur.

Ladite au moins une bâche d'étanchéité est ainsi destinée à participer à la diffusion et à l'emprisonnement de la vapeur qui est diffusée dans le sol. Elle peut permettre également une augmentation de la surface d'action du caisson équipé.

Ladite au moins une bâche d'étanchéité permet alors avantageusement de garder le sol à une température élevée (par exemple supérieure à 80°C), pendant un temps important (éventuellement plus de 15 minutes).

Selon un mode de réalisation préféré, le contour du bloc support comprend quatre bords, à savoir deux bords transversaux, destinés à former un bord avant et un bord arrière tenant compte du sens d'avancement dudit engin de désinfection, et deux bords latéraux, destinés à s'étendre parallèlement audit sens d'avancement.

L'un au moins desdits bords est équipé de ladite au moins une bâche d'étanchéité.

Des caractéristiques non limitatives et avantageuses de ce mode de réalisation préféré, prises individuellement ou selon toutes les combinaisons techniquement possibles, sont les suivantes :
- l'un au moins des bords est équipé d'au moins une bâche d'étanchéité comportant une bande supérieure, solidarisée avec ledit bloc support, et une bande inférieure destinée, en fonctionnement, à recouvrir le sol ; ledit caisson comporte avantageusement des moyens d'appui qui sont agencés pour exercer une pression sur une face supérieure de ladite au moins une bâche d'étanchéité, en vue de participer au maintien de ladite bande inférieure sur le sol, par exemple au moins une tôle d'appui destinée à être orientée vers le sol et à venir appuyer sur une face supérieure de ladite bâche d'étanchéité ;
- un second bord transversal, destiné à former un bord arrière, comporte au moins une première bâche d'étanchéité arrière dont la longueur est supérieure ou égale à 1 m, de préférence de 5 à 15 m ; ledit caisson comporte avantageusement des moyens de stockage qui sont conçus pour le repliement / déploiement de ladite au moins une première bâche d'étanchéité arrière ; selon un mode de réalisation particulier, le second bord transversal comporte au moins une seconde bâche d'étanchéité arrière, sous-jacente de ladite au moins une première bâche d'étanchéité arrière et avantageusement fixe, dont la longueur est d'au moins 0,2 m, de préférence entre 0,2 et 1 m ;
- un premier bord transversal, destiné à former un bord avant, comporte une bâche d'étanchéité avant dont la longueur est d'au moins 0,2 m, de préférence entre 0,2 et 1 m, de préférence encore de 0,4 à 0,6 m ;
- l'un au moins des bords transversaux est équipé d'au moins une bâche d'étanchéité latérale, laquelle au moins une bâche d'étanchéité latérale est avantageusement attachée entre deux caissons juxtaposés, identiques ou similaires ;
- le bloc support comporte (i) un panneau principal, en forme de parallélogramme et comportant deux faces opposées, une face supérieure et une face inférieure, et (ii) deux panneaux latéraux en regard, prolongeant ledit panneau principal du côté de sa face inférieure et formant les bords latéraux dudit bloc support, lequel panneau principal et lesquels panneaux latéraux forment des bords transversaux trapézoïdaux.

D'autres caractéristiques non limitatives et avantageuses du produit conforme à l'invention, prises individuellement ou selon toutes les combinaisons techniquement possibles, sont les suivantes :
- ledit caisson comporte des moyens pour diffuser la vapeur sous la surface du sol, par exemple en forme d'une patte d'oie, avantageusement pour injecter la vapeur à une profondeur allant de 5 à 20 cm ;
- ladite au moins une bâche d'étanchéité est réalisée dans un matériau souple et étanche au liquide ;
- le bloc support possède une largeur et une longueur allant de 1 à 2 m.

La présente invention concerne encore l'engin de désinfection du sol par la vapeur, comprenant un châssis équipé :
- de moyens de déplacement sur le sol, par exemple des roues ou des chenilles,
- un générateur de vapeur, et
- au moins un caisson selon l'invention.

En d'autres termes, la présente invention concerne encore un engin de désinfection du sol par la vapeur, comprenant un châssis équipé :
- de moyens de déplacement sur le sol, par exemple des roues ou des chenilles,
- d'un générateur de vapeur, et
- d'au moins un caisson,

lequel caisson comprend un bloc support qui est destiné à être connecté fluidiquement à un générateur de vapeur et à former une cloche recouvrant le sol pour diffuser / emprisonner la vapeur diffusée dans le sol,
lequel bloc support est équipé d'au moins une bâche d'étanchéité, étanche à la vapeur,
laquelle au moins une bâche d'étanchéité est attachée audit bloc support, avantageusement sur au moins une partie de son contour, pour former une jupe qui participe à emprisonner ladite vapeur.

D'autres caractéristiques non limitatives et avantageuses de l'engin (ou système) conforme à l'invention, prises individuellement ou selon toutes les combinaisons techniquement possibles, sont les suivantes :
- ledit engin comporte au moins deux caissons dont les bords latéraux sont juxtaposés, lesquels bords latéraux juxtaposés sont avantageusement reliés par au moins une bâche d'étanchéité latérale ;
- ledit engin de désinfection comporte des moyens de manœuvre dudit au moins un caisson par rapport audit châssis, des moyens de détection du relief du sol en amont dudit au moins un caisson, et des moyens de pilotage, pour le pilotage des moyens de manœuvre tenant compte dudit relief du sol ;
- ledit engin est équipé de moyens de mesure de la température du sol, et de moyens de pilotage d'au moins un paramètre de fonctionnement dudit engin, par exemple sa vitesse d'avancement, tenant compte de ladite température du sol ; les moyens de mesure de la température du sol se situent avantageusement du côté d'un second bord transversal du bloc support, destiné à former un bord arrière, avantageusement conçus pour mesurer la température sous la surface du sol, par exemple à une profondeur allant de 5 à 50 cm, de préférence de 5 à 30 cm ;
- ledit engin comporte encore des moyens de pilotage comprenant un premier module de pilotage des moyens de déplacement, conçu pour le cheminement autonome et en continu dudit engin selon au moins une ligne droite, avantageusement à une vitesse allant jusqu'à 4 à 5 km/h, et un second module de pilotage du générateur de vapeur, conçu pour la diffusion en continu de vapeur au sein dudit au moins un caisson lors dudit cheminement autonome et en continu à une vitesse allant de 30 m / h à 100 m / h (fonction de la capacité de la chaudière en kg de vapeur / heure).

La présente invention concerne également le procédé pour la désinfection du sol, avantageusement en flux continu, par la mise en œuvre d'un engin de désinfection selon l'invention.

L'engin de désinfection chemine en continu selon au moins une ligne droite, avantageusement à une vitesse allant de 30 m / h à 100 m / h.

Et, sur ladite au moins une ligne droite, la vapeur est diffusée en continu au sein dudit au moins un caisson.

Les moyens de pilotage sont avantageusement conçus pour piloter au moins un paramètre de fonctionnement dudit engin de désinfection, par exemple sa vitesse d'avancement, tenant compte de la température du sol relevée.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### Description détaillée de l'invention

De plus, diverses autres caractéristiques de l'invention ressortent de la description annexée effectuée en référence aux dessins qui illustrent des formes, non limitatives, de réalisation de l'invention et où :
[Fig. 1] est une vue générale, et en perspective, d'un engin de désinfection selon l'invention ;
[Fig. 2] est une vue générale, et en perspective, de caissons selon l'invention pouvant équiper l'engin de désinfection selon la figure 1 ;
[Fig. 3] est une vue agrandie du détail III de la figure 2, montrant la structure de l'un de ces caissons (sans le panneau principal et les panneaux latéraux) ;
[Fig. 4] est une vue générale, de dessus, des caissons selon la figure 1 ;
[Fig. 5] est une vue en coupe des caissons selon la figure 1, selon un plan de coupe transversal passant par ces caissons ;
[Fig. 6] est une vue partielle et agrandie de la figure 5, montrant la structure de l'un des caissons ;
[Fig. 7] est une vue en coupe de l'un des caissons, selon un plan de coupe longitudinal VII-VII illustré sur les figures 5 ou 6 ;
[Fig. 8] est une vue en perspective et schématique de moyens pour diffuser la vapeur sous la surface du sol, ici en forme de pattes d'oie.

Il est à noter que, sur ces figures, les éléments structurels et/ou fonctionnels communs aux différentes variantes peuvent présenter les mêmes références.

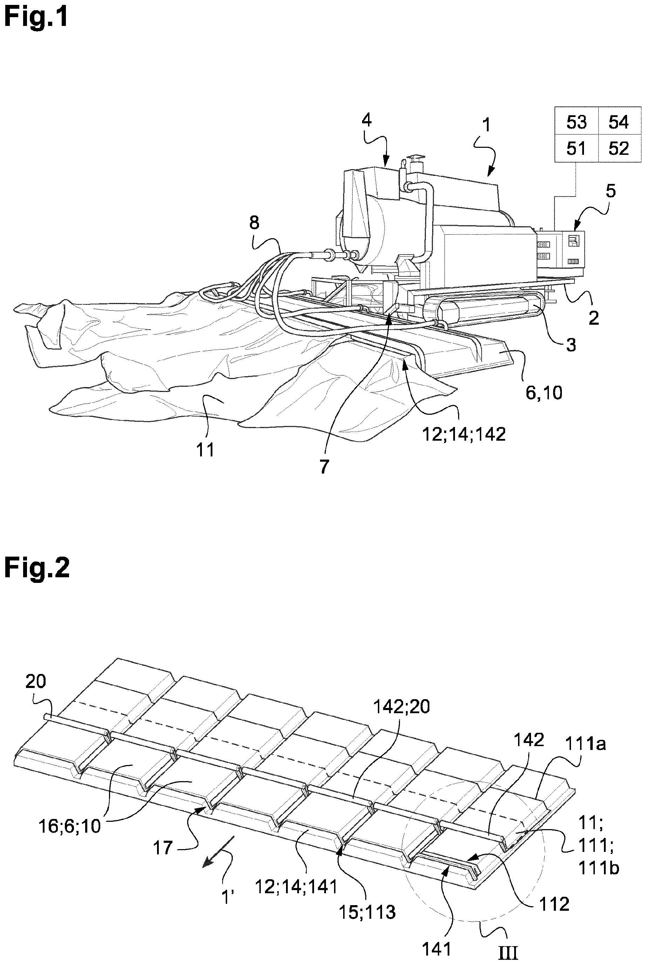

Tel que représenté schématiquement sur la figure 1, la présente invention concerne un engin de désinfection 1 qui est adapté à la désinfection du sol par la vapeur.

Cet engin de désinfection 1 constitue encore un système de désinfection, avantageusement un flux continu.

Un tel engin de désinfection 1 est en particulier adapté à la désinfection des sols agricoles dans les maraîchages.

Pour cela, cet engin de désinfection 1 comprend un châssis 2 qui est équipé :
- de moyens de déplacement sur le sol 3,
- un générateur de vapeur 4,
- des moyens de pilotage 5 (dits encore « moyens de commande »), et
- au moins un caisson 6, et en l'espèce plusieurs caissons 6 juxtaposés latéralement, pour diffuser / emprisonner la vapeur dans le sol.

Les moyens de déplacement 3 comprennent ici des chenilles. De manière alternative, ces moyens de déplacement 3 peuvent comprendre des roues.

Ces moyens de déplacement 3 autorisent par exemple une vitesse maximale allant jusqu'à 4 à 5 km/h.

Le générateur de vapeur 4 comprend une chaudière cylindrique qui s'étend horizontalement et longitudinalement (dans le sens d'avancement 1' de l'engin de désinfection 1), recevant l'eau pour la transformer en vapeur.

Ce générateur de vapeur 4 comporte, de préférence, un brûleur qui est alimenté en carburant.

Ce générateur de vapeur 4 génère, par exemple, un débit de vapeur allant de 100 kg par heure à 2 000 kg par heure.

Les moyens de pilotage 5 commandent avantageusement la partie opérative de l'engin de désinfection 1 (notamment les moyens de déplacement 3 et le générateur de vapeur 4).

Cette partie opérative comprend avantageusement un circuit hydraulique équipé de différents actionneurs (pompes, moteurs, vérins, etc.).

Les moyens de pilotage 5 comprennent par exemple :
- un boîtier électronique de commande, pour le pilotage dudit engin de désinfection 1, et
- une interface utilisateur, pour le pilotage dudit engin de désinfection 1 par l'intermédiaire dudit boîtier électronique de commande.

Le boîtier électronique de commande consiste avantageusement en un dispositif courant du genre calculateur numérique, conçu pour fonctionner sur les engins mobiles intégrant un circuit hydraulique et apte à résister aux vibrations comme aux variations de températures.

Ce boîtier électronique de commande, désigné encore « système embarqué » ou « système enfoui » ou « firmware » ou « calculateur embarqué », comprend des microprocesseurs à basse consommation d'énergie ou des microcontrôleurs, associés à une partie mémoire sur laquelle est enregistré au moins un programme d'ordinateur.

La partie mémoire consiste généralement en une mémoire morte (ROM), EPROM, EEPROM, FLASH, etc.

Ce boîtier de commande est avantageusement équipé encore :
- d'entrées analogiques ou d'entrées numériques, destinées à être connectées notamment à des capteurs et à l'interface utilisateur, et
- de sorties puissance, permettant de piloter directement des distributeurs proportionnels ainsi que des servocommandes de pompes.

Le programme d'ordinateur enregistré au sein de ce boîtier électronique de commande est programmé à façon (par exemple sous la forme de modules décrits par la suite).

Ce programme d'ordinateur comporte en particulier des moyens de code de programme pour le pilotage de l'engin de désinfection 1, lorsque ledit programme d'ordinateur est exécuté par ce boîtier électronique de commande.

En particulier, le programme d'ordinateur comporte des moyens de codes de programme pour la mise en œuvre de rampes d'accélération et de décélération, lorsque ledit programme d'ordinateur est mis en œuvre par le boîtier électronique de commande.

Ces rampes d'accélération et de décélération sont ajustées à façon pour chacun des actionneurs, de manière à optimiser la souplesse de fonctionnement selon notamment les attentes des utilisateurs et les contraintes de sécurité.

La partie opérative, commandée par ces moyens de pilotage 5, comprend ainsi avantageusement un circuit hydraulique équipé de différents actionneurs hydrauliques (pompes, moteurs, vérins, etc.).

L'arrière du châssis 2 porte ledit au moins un caisson 6, avantageusement par l'intermédiaire de moyens de manœuvre 7.

Les moyens de manœuvre 7 assurent une manœuvre dudit au moins un caisson 6 par rapport audit châssis 2, avantageusement selon un degré de liberté en translation verticale (pour tenir compte du relief du sol par exemple).

Pour cela, les moyens de manœuvre 7 comprennent par exemple des actionneurs linéaires (non représentés), par exemple des vérins hydrauliques. Ces moyens de manœuvre 7 sont également commandés par les moyens de pilotage 5.

Ledit au moins un caisson 6 permet d'exécuter la désinfection du sol par injection de la vapeur sous pression issue du générateur de vapeur 4.

Ledit au moins un caisson 6 est relié au générateur de vapeur 4 au moyen d'au moins une conduite souple 8 qui conduit la vapeur et qui autorise le mouvement dudit au moins un caisson 6.

La conduite souple 8, formant moyens de raccordement fluidique, assure le cheminement de la vapeur depuis le générateur de vapeur 4 jusqu'audit au moins un caisson 6.

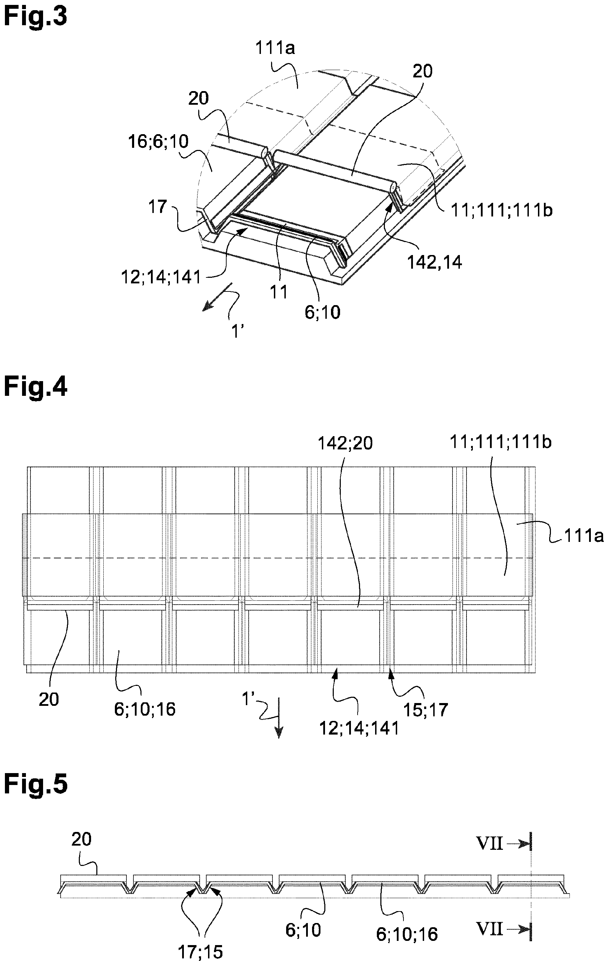

Les caissons 6 selon l'invention sont décrits plus en détails ci-dessous en relation avec les figures 2 à 8.

Un tel caisson 6 comprend :
- un bloc support 10, destiné à être connecté fluidiquement au générateur de vapeur 4 et à former une cloche recouvrant le sol pour diffuser / emprisonner la vapeur diffusée au-dessus et dans le sol, et
- au moins une bâche d'étanchéité 11, étanche à la vapeur pour participer à sa diffusion et à son emprisonnement.

Selon l'invention, ladite au moins une bâche d'étanchéité 11 est attachée au bloc support 10, avantageusement sur au moins une partie de son contour 12.

Ladite au moins une bâche d'étanchéité 11 forme alors une jupe qui s'étend depuis le bloc support 10 (sur une partie du contour 12 ou sur tout le contour 12) et qui coopère avec ce bloc support 10 pour emprisonner la vapeur diffusée au niveau du sol S.

Le bloc support 10 a ici un contour 12 présentant une forme de parallélogramme (carrée ou rectangulaire).

Le contour 12 comprend quatre bords :
- deux bords transversaux 14, destinés à former un bord avant 141 et un bord arrière 142 tenant compte du sens d'avancement 1' de l'engin de désinfection 1, et
- deux bords latéraux 15, destinés à s'étendre parallèlement à ce sens d'avancement 1'.

La distance entre les bords transversaux 14 définit la longueur du bloc support 10. La distance entre les bords latéraux 15 définit la largeur du bloc support 10.

Ce bloc support 10 possède avantageusement une largeur et une longueur allant de 1 à 2 m.

En l'espèce encore, le bloc support 10 comporte ici, vue dans le sens d'avancement, une forme générale triédrique avec :
- un panneau principal 16, en forme de parallélogramme (carré ou rectangulaire), qui comporte deux faces opposées, une face supérieure 161 (orientée vers le haut) et une face inférieure 162 (orientée vers le sol), et
- deux panneaux latéraux 17 en regard, prolongeant ce panneau principal 16 du côté de sa face inférieure 162.

Au moins une conduite souple 8 débouche ici au travers du panneau principal 16 pour l'alimentation en vapeur.

Cette forme du bloc support 10 est notamment intéressante pour un cheminement continu du caisson 6, le long d'une ligne droite.

Les panneaux 16, 17 consistent par exemple en des plaques métalliques qui sont assemblées par boulonnage et/ou par soudage.

Les deux panneaux latéraux 17 forment ici les bords latéraux 15 du bloc support 10. Le panneau principal 16 et les panneaux latéraux 17 forment quant à eux les bords transversaux 14.

Les panneaux latéraux 17 sont ici divergents du haut vers le bas, de sorte que les bords transversaux 14 consistent en des bords transversaux trapézoïdaux 14.

Le caisson 6, et en particulier son bloc support 10, est donc équipé d'au moins une bâche d'étanchéité 11 adaptée à former une sorte d'isolant mince (ou de cloison souple), qui participe à emprisonner la vapeur et à optimiser l'action de la vapeur au sein du caisson 6 / dans le sol.

Une telle bâche d'étanchéité 11 est avantageusement réalisée dans un matériau souple et étanche au liquide, par exemple un matériau thermoplastique, de préférence encore un matériau PVC.

La bâche d'étanchéité 11 consiste avantageusement en une bâche à résistance haute température, de 500 à 1 500 g au cm².

L'un au moins des bords 14, 15 précité du caisson 6 est avantageusement équipé de ladite au moins une bâche d'étanchéité 11.

En d'autres termes, chaque bloc support 10 peut être équipé d'une unique bâche d'étanchéité 11, ou d'une combinaison d'au moins deux bâches d'étanchéités 11, choisie(s) parmi les bâches d'étanchéité décrites ci-après (une bâche d'étanchéité arrière, une bâche d'étanchéité avant et deux bandes d'étanchéité latérale).

De préférence encore, comme illustré en l'espèce, chaque bloc support 10 peut être équipé d'une combinaison de quatre bâches d'étanchéité 11 (une bâche d'étanchéité arrière, une bâche d'étanchéité avant et deux bandes d'étanchéité latérale).

Le bord arrière 142 comporte au moins une bâche d'étanchéité arrière 111.

En l'espèce, le bord arrière 142 comporte au moins deux bâches d'étanchéité arrière 111 :
- une première bâche d'étanchéité arrière 111a, supérieure ou sus-jacente, et
- une seconde bâche d'étanchéité arrière 111b, inférieure ou sous-jacente.

La première bâche d'étanchéité arrière 111a est destinée à reposer par-dessus la seconde bâche d'étanchéité arrière 111b.

La longueur de la première bâche d'étanchéité arrière 111a est avantageusement supérieure à la longueur de la seconde bâche d'étanchéité arrière 111b. La première bâche d'étanchéité arrière 111a est ainsi destinée à reposer, pour une partie amont, sur la seconde bâche d'étanchéité arrière 111b et, pour une partie aval, sur le sol.

La première bâche d'étanchéité arrière 111a présente avantageusement une longueur (mesurée dans le sens d'avancement 1') d'au moins 1 m, de préférence de 5 à 15 m. La seconde bâche d'étanchéité arrière 111b présente avantageusement une longueur (mesurée dans le sens d'avancement 1') d'au moins 0,2 m, de préférence entre 0,2 et 1 m.

Plus généralement, la longueur de la première bâche d'étanchéité arrière 111a est avantageusement ajustable. La première bâche d'étanchéité arrière 111a est notamment avantageusement manœuvrable entre des positions enroulée / déroulée.

La longueur de la seconde bâche d'étanchéité arrière 111b est avantageusement fixe.

Ladite au moins une bâche d'étanchéité arrière 111 s'étend en outre avantageusement sur toute la longueur du bord arrière 142 associé (autrement dit sur toute la largeur du bloc support 10).

Ladite au moins une bâche d'étanchéité arrière 111 est ainsi destinée à trainer sur le sol S, derrière le caisson 6 équipé (tenant compte du sens d'avancement 1'). Cette au moins une bâche d'étanchéité arrière 111 prolonge ainsi le bord arrière 142 du bloc support 10, vers l'arrière / vers l'aval (tenant compte du sens d'avancement 1').

Ladite au moins une bâche d'étanchéité arrière 111, et en particulier la première bâche d'étanchéité arrière 111a, forme ainsi une sorte de paroi isolante thermique, qui recouvre le sol S et prolonge le bloc support 10 vers l'arrière, afin de réduire la déperdition thermique du sol S suite à son élévation en température. La température du sol S est alors préservée à une valeur élevée sous ladite au moins une bâche d'étanchéité arrière 111, prolongeant l'action de désinfection du sol S.

De préférence, suite à son élévation en température, la première bâche d'étanchéité arrière 111a permet de garder le sol S à une température supérieure à 80°C pendant au moins 7 minutes, de préférence pendant au moins 10 minutes, de préférence encore pendant au moins 15 minutes.

La seconde bâche d'étanchéité arrière 111b forme un panneau arrière souple, formant une cloison pour participer à emprisonner la vapeur au sein du bloc support 10 (en évitant une perte de vapeur vers l'arrière) et à optimiser l'action de la vapeur sous le caisson 6 et à optimiser la pénétration de la vapeur dans le sol.

Tenant compte de la longueur de la première bâche d'étanchéité arrière 111a , le caisson 6 comporte avantageusement des moyens de stockage 20 qui sont conçus pour le repliement / déploiement de cette première bâche d'étanchéité arrière 111a.

Ces moyens de stockage 20 se présente avantageusement sous la forme d'un dévidoir ou rouleau, dont l'axe de rotation est orienté perpendiculairement au sens d'avancement 1', pour l'enroulement / déroulement de la première bâche d'étanchéité arrière 111a.

Le bord avant 141 du bloc support 10 peut être équipé d'une bâche d'étanchéité avant 112.

La longueur de cette bâche d'étanchéité avant 112 (mesurée dans le sens d'avancement 1') est d'au moins 0,2 m, de préférence entre 0,2 et 1 m, de préférence encore de 0,4 à 0,6 m.

Cette bâche d'étanchéité avant 112 s'étend en outre avantageusement sur toute la longueur du bord avant 141 associé (autrement dit sur toute la largeur du bloc support 10).

Cette bâche d'étanchéité avant 112 est ainsi destinée à trainer derrière le bord avant 141 (tenant compte du sens d'avancement 1'), au sein du bloc support 10.

Elle forme ainsi un panneau avant souple, formant une cloison pour participer à emprisonner la vapeur au sein du bloc support 10 (en évitant une perte de vapeur vers l'avant) et à optimiser l'action de la vapeur sous le caisson 6 et à optimiser la pénétration de la vapeur dans le sol.

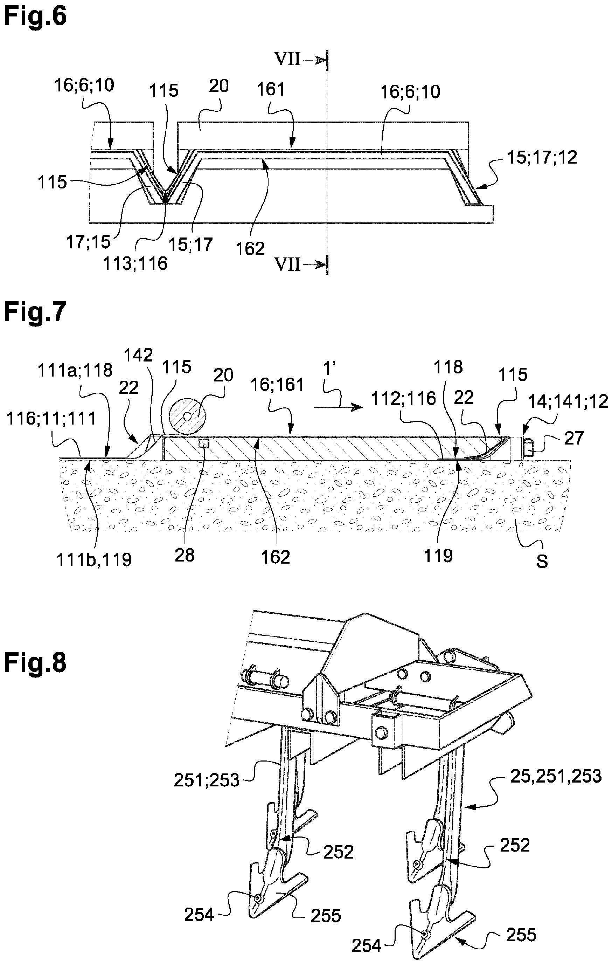

L'un au moins des bords transversaux 15 (de préférence les deux bords transversaux 15) peut être équipé d'au moins une bâche d'étanchéité latérale 113 (voir en particulier la figure 6).

En particulier, chaque bâche d'étanchéité latérale 113 est avantageusement attachée entre deux des caissons 6 juxtaposés. Plus précisément, cette bâche d'étanchéité latérale 113 relie les panneaux latéraux 17 attenants de deux blocs supports 10 juxtaposés.

Cette bâche d'étanchéité latérale 113 forme alors un panneau intercalaire souple reliant deux caissons 6 juxtaposés, constituant une cloison pour participer à emprisonner la vapeur en regard du sol S et à optimiser l'action de la vapeur entre ses deux caissons 6 juxtaposés.

Une telle bâche d'étanchéité latérale 113 est alors particulièrement intéressante pour traiter la bande de sol s'étendant entre deux caissons 6 juxtaposés, évitant ainsi de laisser une bande non désinfectée.

Encore de manière générale, une bâche d'étanchéité 11 comporte avantageusement :
- une bande supérieure 115, solidarisée avec le bloc support 10, et
- une bande inférieure 116, destinée, en fonctionnement, à recouvrir le sol S.

La bande supérieure 115 est solidarisée avec le bloc support 10 par le biais, par exemple, de boulons et/ou de profilés.

La bande inférieure 116 pend (ou est suspendue) depuis le bloc support 10.

Cette bande inférieure 116 forme alors la jupe, sus-jacente du sol S, qui participe à emprisonner la vapeur en recouvrant le sol S.

Par « recouvrir le sol S », on englobe notamment :
- une bande inférieure 116 qui s'étend au-dessus et en regard du sol S (avec une distance entre la bande inférieure 116 et le sol S), et
- une bande inférieure 116 qui vient en appui (reposer) sur le sol S et qui glisse sur le sol S lors de son déplacement.

En ce sens, les bâches d'étanchéité arrière 111 et avant 112 se composent ici de :
- une bande supérieure 115, et
- une bande inférieure 116 destinée à venir en appuie sur le sol S.

Les bâches d'étanchéité latérale 113 se composent :
- de deux bandes supérieures 115, solidarisées chacune avec l'un des deux blocs supports 10 juxtaposés, et
- une bande inférieure 116, intercalée entre les deux bandes supérieures 115, qui comble l'espace entre les blocs support 10 et qui est destinée à s'étendre en regard du sol S.

Chaque bâche d'étanchéité 11 comporte encore deux faces :
- une face supérieure 118, orientée vers le haut, et
- une face inférieure 119, orientée vers le bas, en particulier destinée à venir en regard du sol S, voire à venir en appui sur ce dernier (pour glisser sur le sol S au cours de l'avancement de l'engin 1).

Et pour un positionnement optimal d'une bâche d'étanchéité 11, le caisson 6 comporte avantageusement des moyens d'appui 22 qui sont agencés pour exercer une pression sur la face supérieure 118 de cette bâche d'étanchéité 11.

Les moyens d'appui 22 participent alors au maintien de la bande inférieure 116 sur le sol S.

En l'espèce, ces moyens d'appui 22 sont avantageusement associés à la bâche d'étanchéité arrière 111 et/ou à la bâche d'étanchéité avant 112.

Les moyens d'appui 22 comprennent par exemple au moins une tôle d'appui destinée à être orientée vers le sol S et à venir appuyer sur la face supérieure 118 de la bâche d'étanchéité 11 associée.

Cette tôle d'appui 22 est avantageusement inclinée par rapport au sol S, divergente tenant compte du sens d'avancement 1', de sorte à autoriser sa déformation élastique (notamment pour épouser au mieux le relief du sol S).

Cette tôle d'appui 22 est avantageusement portée par les panneaux 16, 17, au niveau du bord arrière 142 et/ou du bord avant 141. Cette tôle d'appui 22 est avantageusement divergente par rapport au panneau 16, 17 associé, dans un sens inverse au sens d'avancement 1'.

Cette tôle d'appui 22 intervient en particulier pour appuyer sur la seconde bâche d'étanchéité arrière 111b.

La première bâche d'étanchéité arrière 111a sert également ici de moyens d'appui pour la seconde bâche d'étanchéité arrière 111b.

Selon encore un mode de réalisation particulier, le caisson 6 comporte des moyens 25 pour diffuser la vapeur sous la surface du sol S. En d'autres termes, ces moyens de diffusion 25 sont adaptés à injecter la vapeur directement sous la surface du sol S, en profondeur.

Par exemple, comme représenté sur la figure 8, de tels moyens de diffusion 25 comprennent par exemple des organes en patte d'oie 251 qui sont équipés de :
- une conduite 252, pour la circulation de la vapeur le long de sa tige 253, et
- au moins une buse 254, pour la libération de la vapeur au niveau de sa tête 255.

Les moyens de diffusion 25 sont avantageusement adaptées à injecter la vapeur à une profondeur allant de 5 à 20 cm.

Cet agencement permet à la vapeur de remonter vers la surface du sol S, favorisant l'action de désinfection sur une profondeur optimale.

Encore pour un positionnement optimal dudit au moins un caisson 6 par rapport au sol S, en particulier en hauteur, l'engin de désinfection 1 comporte des moyens 27 de détection du relief du sol S en amont dudit au moins un caisson 6 (tenant compte du sens d'avancement 1' ― figure 7).

Les moyens 27 de détection du relief du sol S sont avantageusement implantés devant le bord avant 141 du bloc support 10.

Ces moyens de détection 27 comprennent par exemple des capteurs de contact pour reconnaître la géométrie du sol, avantageusement des patins qui trainent dans les passe-pieds et sur lesquels viennent se rejoindre les caissons 6.

Les moyens de pilotage 5, avantageusement via un module de pilotage 51 dédié, sont conçus pour piloter les moyens de manœuvre 7 tenant compte des données collectées par ces moyens 27 de détection du relief du sol S.

Par un pilotage continu des moyens de manœuvre 7, les moyens de pilotage 5 visent ainsi à maintenir ledit au moins un caisson 6 à une hauteur constante, ou au moins approximativement constante, par rapport à la surface du sol S.

Pour un traitement optimal du sol, l'engin 1 peut encore être équipé de moyens 28 de mesure de la température du sol S.

Pour cela, les moyens 28 de mesure de la température du sol S se situent avantageusement du côté du bord arrière 142 (figure 7).

De plus, ces moyens de mesure 28 sont avantageusement conçus pour mesurer la température sous la surface du sol S, par exemple à une profondeur allant de 5 à 50 cm, de préférence de 5 à 30 cm.

Les moyens 28 de mesure de la température du sol S comprennent par exemple des sondes de température intégrés dans une coutre.

Et les moyens de pilotage 5, avantageusement via un module de pilotage 52, sont conçus pour piloter au moins un paramètre de fonctionnement de cet engin 1 tenant compte de la température du sol S relevée.

Ce pilotage vise en particulier à obtenir une température cible du sol S qui est adapté à l'action de désinfection.

De préférence, les moyens de pilotage 5, via le module de pilotage 52, interviennent sur la vitesse d'avancement de l'engin de désinfection 1 de sorte que :
- une diminution de la température du sol S collectée conduit à une réduction de la vitesse de l'engin 1 afin d'augmenter le temps de traitement à la vapeur et d'atteindre la température cible recherchée, et
- une augmentation de la température du sol S collectée conduit à une augmentation de la vitesse afin de réduire le temps de traitement à la vapeur et revenir vers la température cible recherchée.

De manière générale, grâce à la structure dudit au moins un caisson 6, l'engin de désinfection 1 selon l'invention est avantageusement destiné à cheminer en continu tout au long de l'opération de désinfection, avantageusement pour une désinfection en flux continu.

Pour cela, les moyens de pilotage 5 comprennent avantageusement :
- un premier module 53 de pilotage des moyens de déplacement 3, conçu pour piloter le cheminement autonome et en continu dudit engin 1 selon au moins une ligne droite, avantageusement à une vitesse allant de 30 m / h à 100 m / h, et
- un second module 54 de pilotage du générateur de vapeur 4, conçu pour piloter la diffusion en continu de vapeur au sein dudit au moins un caisson 6 lors de ce cheminement autonome et en continu.

En pratique, l'engin de désinfection 1 est ainsi adapté à mettre en œuvre un procédé pour la désinfection du sol S par la vapeur.

L'engin de désinfection 1 est avantageusement destiné à avancer en continu sur chaque rangée de la parcelle à traiter, généralement selon plusieurs lignes droites parallèles, pour obtenir une désinfection en flux continu.

Cet engin de désinfection 1 chemine alors en continu, sur chaque ligne droite, avantageusement à une vitesse allant de 30 m / h à 100 m / h (selon une vitesse constante ou variable, par exemple pour ajuster le temps de traitement en fonction de la température du sol S en vue d'atteindre une température cible).

Sur ladite au moins une ligne droite, la vapeur est avantageusement diffusée en continu (flux continu) au sein dudit au moins un caisson 6, assurant une opération de désinfection du sol S en continu.

Lors de ce cheminement, le bloc support 10 glisse au-dessus du sol.

Ce cheminement continu est en particulier permis par ladite au moins une bâche d'étanchéité arrière 111 qui est destinée à trainer derrière le caisson 6 équipé (tenant compte du sens d'avancement 1').

La seconde bâche d'étanchéité arrière 111b vise ici à contenir la vapeur sous le bloc support 10 et à favoriser sa diffusion dans le sol.

Ladite au moins une bâche d'étanchéité arrière 111 (en particulier la première bâche d'étanchéité arrière 111a) prolonge alors le bloc support 10 vers l'arrière, afin de réduire la déperdition thermique du sol S. Suite à son élévation en température par la vapeur, la température du sol S est maintenue à une valeur élevée sous la bâche d'étanchéité arrière 111, prolongeant l'action de désinfection du sol S.

De préférence, la bâche d'étanchéité arrière 111 permet de garder le sol S à une température supérieure à 80°C pendant au moins 7 minutes, éventuellement au moins 10 minutes, voire au moins 15 minutes.

Lors de ce cheminement, la bâche d'étanchéité avant 112 forme ici un panneau avant souple, pour participer à emprisonner la vapeur au sein du bloc support 10 et à optimiser l'action de la vapeur sous le caisson 6 et à optimiser la pénétration de la vapeur dans le sol.

Les bâches d'étanchéité latérale 113 vont quant à elles permettre le traitement de la bande de sol s'étendant entre deux caissons 6 juxtaposés, sans laisser de bandes non désinfectées.

Tout au long de ce déplacement, les moyens de pilotage 5 vont intervenir avantageusement sur des paramètres et réglages de l'engin 1 :
- les moyens de pilotage 5, avantageusement via un module de pilotage 51 dédié, pilotent les moyens de manœuvre 7 tenant compte des données collectées par les moyens 27 de détection du relief du sol S,
- les moyens de pilotage 5, avantageusement via un module de pilotage 52, pilotent au moins un paramètre de fonctionnement de cet engin 1 tenant compte de la température du sol S relevée.

Ces actions des moyens de pilotage 5 concourent également à la désinfection du sol S par un cheminement en continu.

Bien entendu, diverses autres modifications peuvent être apportées à l'invention dans le cadre des revendications annexées.

## Revendications

1. Caisson pour un engin de désinfection du sol par la vapeur,
laquelle caisson (6) comprend un bloc support (10) qui est destiné à être connecté fluidiquement à un générateur de vapeur (4) et à former une cloche recouvrant le sol (S) pour diffuser / emprisonner la vapeur diffusée dans le sol (S),
**caractérisé en ce que** ledit bloc support (10) est équipé d'au moins une bâche d'étanchéité (11), étanche à la vapeur,
laquelle au moins une bâche d'étanchéité (11) est attachée audit bloc support (10), avantageusement sur au moins une partie de son contour (12), pour former une jupe qui participe à emprisonner ladite vapeur.

2. Caisson selon la revendication 1, **caractérisé en ce que** le contour (12) du bloc support (10) comprend quatre bords (14, 15) :
- deux bords transversaux (14), destinés à former un bord avant (141) et un bord arrière (142) tenant compte du sens d'avancement (1') dudit engin de désinfection (1), et
- deux bords latéraux (15), destinés à s'étendre parallèlement audit sens d'avancement (1'),
et **en ce que** l'un au moins desdits bords (14, 15) est équipé de ladite au moins une bâche d'étanchéité (11).

3. Caisson selon la revendication 2, **caractérisé en ce que** l'un au moins des bords (14, 15) est équipé d'au moins une bâche d'étanchéité (11) comportant :
- une bande supérieure (115), solidarisée avec ledit bloc support (10), et
- une bande inférieure (116), destinée, en fonctionnement, à recouvrir le sol (S).

4. Caisson selon la revendication 3, **caractérisé en ce que** ledit caisson (6) comporte des moyens d'appui (22) qui sont agencés pour exercer une pression sur une face supérieure (118) de ladite au moins une bâche d'étanchéité (11), en vue de participer au maintien de ladite bande inférieure (116) sur le sol (S), par exemple au moins une tôle d'appui destinée à être orientée vers le sol (S) et à venir appuyer sur une face supérieure (118) de ladite bâche d'étanchéité (11).

5. Caisson selon l'une quelconque des revendications 2 à 4, **caractérisé en ce qu'**un second bord transversal (142), destiné à former un bord arrière, comporte au moins une bâche d'étanchéité arrière (111) dont la longueur est d'au moins 1 m, de préférence de 5 à 15 m.

6. Caisson selon la revendication 5, **caractérisé en ce que** ledit caisson (6) comporte des moyens de stockage (20) qui sont conçus pour le repliement / déploiement de ladite au moins une bâche d'étanchéité arrière (111).

7. Caisson selon l'une quelconque des revendications 2 à 6, **caractérisé en ce qu'**un premier bord transversal (141), destiné à former un bord avant, comporte une bâche d'étanchéité avant (112) dont la longueur est d'au moins 0,2 m, de préférence entre 0,2 et 1 m, de préférence encore de 0,4 à 0,6 m.

8. Caisson selon l'une quelconque des revendications 2 à 7,
**caractérisé en ce que** l'un au moins des bords transversaux (15) est équipé d'au moins une bâche d'étanchéité latérale (113),
laquelle au moins une bâche d'étanchéité latérale (113) est avantageusement attachée entre deux caissons (6) juxtaposés, identiques ou similaires.

9. Engin de désinfection du sol (S) par la vapeur, comprenant un châssis (2) équipé :
- de moyens (3) de déplacement sur le sol (S), par exemple des roues ou des chenilles,
- d'un générateur de vapeur (4), et
- d'au moins un caisson (6) selon l'une quelconque des revendications 1 à 8.

10. Engin de désinfection selon la revendication 9, en combinaison avec la revendication 2, **caractérisé en ce que** ledit engin comporte au moins deux caissons (6) dont les bords latéraux (15) sont juxtaposés,
lesquels bords latéraux (15) juxtaposés sont avantageusement reliés par au moins une bâche d'étanchéité latérale (113).

11. Engin de désinfection selon l'une quelconque des revendications 9 ou 10, **caractérisé en ce que** ledit engin est équipé de moyens de mesure de la température du sol, et de moyens de pilotage (5) d'au moins un paramètre de fonctionnement dudit engin de désinfection (1), par exemple sa vitesse d'avancement, tenant compte de ladite température du sol.

12. Engin de désinfection selon la revendication 11, **caractérisé en ce que** les moyens de mesure de la température du sol se situent du côté d'un second bord transversal (142) du bloc support (10), destiné à former un bord arrière.

13. Procédé pour la désinfection du sol (S) par la mise en œuvre d'un engin de désinfection (1) selon l'une quelconque des revendications 9 à 12,
**caractérisé en ce que** ledit engin de désinfection (1) chemine en continu selon au moins une ligne droite, avantageusement à une vitesse allant de 30 m / h à 100 m / h,
et **en ce que**, sur ladite au moins une ligne droite, la vapeur est diffusée en continu au sein dudit au moins un caisson (6).

14. Procédé pour la désinfection du sol (S), selon la revendication 13 en combinaison avec l'une quelconque des revendications 11 ou 12, **caractérisé en ce que** les moyens de pilotage (5) sont conçus pour piloter au moins un paramètre de fonctionnement dudit engin de désinfection (1), par exemple sa vitesse d'avancement, tenant compte de la température du sol (S) relevée.
